# EUROPEAN PATENT APPLICATION

(11) **EP 4 354 580 A1**
(43) Date of publication of application: **17.04.2024**
(21) Application number: 22819854.5
(22) Date of filing: 10.03.2022
(51) Int. Cl.: H01M 10/0585, H01M 10/0562, H01M 50/548

(54) **BATTERY AND METHOD FOR MANUFACTURING BATTERY**

(30) Priority: 07.06.2021 JP 2021095435
(71) Applicant: Panasonic Intellectual Property Management Co., Ltd., Osaka 571-0057 (JP)
(72) Inventor: MORIOKA, Kazuhiro, Tokyo 103-0022 (JP); HIRANO, Koichi, Tokyo 103-0022 (JP); KAWASE, Akira, Tokyo 103-0022 (JP)
(74) Representative: Grünecker Patent- und Rechtsanwälte PartG mbB
(86) International application number: PCT/JP2022/010445
(87) International publication number: WO 2022/259664

(57) **Abstract**

A battery according to an aspect of the present disclosure includes: a power generation element having a structure in which battery cells are laminated, each of the battery cells including an electrode layer, a counter electrode layer, and a solid electrolyte layer located between the electrode layer and the counter electrode layer. The power generation element includes a first pair of side surfaces facing each other, and a second pair of side surfaces facing each other and different from the first pair of side surfaces. At least one of the battery cells is provided with a recess where the solid electrolyte layer is receded with respect to the electrode layer and the counter electrode layer on each of the first pair of side surfaces. Surface roughness Rz₂ of each of the second pair of side surfaces is smaller than surface roughness Rz₁ of each of the first pair of side surfaces.

## Description

### Technical Field

The present disclosure relates to a battery and a method for manufacturing a battery.

### Background Art

PTL 1 and PTL 2 disclose a configuration concerning a side surface of an all-solid-state battery.

### Citation List

### Patent Literature

PTL 1: International Publication No. 2020/179934
PTL 2: International Publication No. 2013/001908

### Summary of Invention

### Technical Problem

In the related art, there has been a demand for improvement in reliability and productivity of a battery. In view of the above, it is an object of the present disclosure to provide a battery and a method for manufacturing a battery, which are capable of achieving high reliability and high productivity at the same time.

### Solution to Problem

A battery according to an aspect of the present disclosure includes: a power generation element having a structure in which battery cells are laminated, each of the battery cells including an electrode layer, a counter electrode layer, and a solid electrolyte layer located between the electrode layer and the counter electrode layer, in which the power generation element includes a first pair of side surfaces facing each other, and a second pair of side surfaces facing each other and different from the first pair of side surfaces, at least one of the battery cells is provided with a recess where the solid electrolyte layer is receded with respect to the electrode layer and the counter electrode layer on each of the first pair of side surfaces, and surface roughness Rz₂ of each of the second pair of side surfaces is smaller than surface roughness Rz₁ of each of the first pair of side surfaces.

A method for manufacturing a battery according to an aspect of the present disclosure includes: a first cutting step of forming second laminated bodies by cutting at least one first laminated body including an electrode layer, a counter electrode layer, and a solid electrolyte layer located between the electrode layer and the counter electrode layer, in which a first pair of cut surfaces facing each other are provided to each of the second laminated bodies by cutting the at least one first laminated body in such a way as to cut the electrode layer, the counter electrode layer, and the solid electrolyte layer collectively; a laminating step of forming a third laminated body by laminating the second laminated bodies such that the respective first pairs of cut surfaces of the second laminated bodies face in the same directions; and a second cutting step of forming a fourth laminated body by cutting the third laminated body, in which a second pair of cut surfaces facing each other and extending in a direction intersecting the first pair of cut surfaces are provided to the fourth laminated body by cutting the third laminated body in such a way as to cut the second laminated bodies collectively.

### Advantageous Effects of Invention

According to the present disclosure, it is possible to provide a battery and a method for manufacturing a battery, which are capable of achieving high reliability and high productivity at the same time.

### Brief Description of Drawings

[Fig. 1] Fig. 1 is a top view of a battery according to an embodiment.
[Fig. 2] Fig. 2 is a sectional view illustrating a sectional structure of the battery according to the embodiment.
[Fig. 3] Fig. 3 is a sectional view illustrating another sectional structure of the battery according to the embodiment.
[Fig. 4] Fig. 4 is a top view of a battery according to modified example 1 of the embodiment.
[Fig. 5] Fig. 5 is a sectional view illustrating a sectional structure of the battery according to the modified example 1 of the embodiment.
[Fig. 6] Fig. 6 is a sectional view illustrating another sectional structure of the battery according to the modified example 1 of the embodiment.
[Fig. 7] Fig. 7 is a top view of a battery according to modified example 2 of the embodiment.
[Fig. 8] Fig. 8 is a sectional view illustrating a sectional structure of the battery according to the modified example 2 of the embodiment.
[Fig. 9] Fig. 9 is a flowchart illustrating an example of a method for manufacturing a battery according to any of the embodiment and the modified examples.
[Fig. 10] Fig. 10 is a top view of a first laminated body used in the method for manufacturing a battery according to any of the embodiment and the modified examples.
[Fig. 11] Fig. 11 is a sectional view illustrating a sectional structure of the first laminated body used in the method for manufacturing a battery according to any of the embodiment and the modified examples.
[Fig. 12] Fig. 12 is a top view of a third laminated body used in the method for manufacturing a battery according to any of the embodiment and the modified examples.
[Fig. 13] Fig. 13 is a sectional view illustrating a sectional structure of the third laminated body used in the method for manufacturing a battery according to any of the embodiment and the modified examples.
[Fig. 14] Fig. 14 is a sectional view illustrating another sectional structure of the third laminated body used in the method for manufacturing a battery according to any of the embodiment and the modified examples.

### Description of Embodiment

### (Underlying Knowledge Forming Basis of One Aspect of Present Disclosure)

In manufacturing a battery, there is a case of cutting an end portion of a battery cell including a current collector, an active material layer, a solid electrolyte layer, and the like in order to define a shape of the battery, to remove unnecessary portions thereof, and so forth. Cutting respective layers of a battery cell collectively can substantially equalize the areas of the respective layers and increase volumetric energy density. A cut surface formed by cutting the battery cell in a thickness direction of the battery cell constitutes a side surface of the battery cell. The inventors of the present disclosure have found out that the following problem arises in a case where the current collector does not project from the active material layer and the like in order to increase the volumetric energy density, such as the aforementioned case in which the side surface is the cut surface.

In general, the current collector is extended and used as an extraction terminal for extracting a current to the outside. In the case where the current collector does not project from the active material layer and the like on the side surface, the current collector cannot be used as the extraction terminal. Particularly, in a case of a laminated battery in which multiple battery cells are laminated, it is difficult to extract the current from locations other than the current collectors at the uppermost part and the lowermost part. For this reason, extraction terminals have to be provided separately from the current collectors and to be arranged on a side surface of a power generation element in which multiple battery cells are laminated.

In a case where the side surface has asperities in this instance, a short circuit between positive and negative electrodes through the extraction terminals is apt to occur due to the asperities when the extraction terminals are arranged on the side surface. Thus, reliability is deteriorated. On the other hand, there is a concern about deterioration of productivity in a case of manufacturing a flat side surface. As mentioned above, the inventors of the present disclosure have found out that it is important to control the state of asperities on the side surface of the power generation element in the case of achieving high reliability and high productivity at the same time in the battery with the increased volumetric energy intensity. Given the circumstances, the present disclosure provides a battery and a method for manufacturing a battery based on the above-mentioned knowledge, which are capable of achieving high reliability and high productivity at the same time by controlling the state of asperities on the side surface of the power generation element even in the case of increasing the volumetric energy density of the battery.

### (Outline of Present Disclosure)

An outline of an aspect of the present disclosure is as follows.

A battery according to an aspect of the present disclosure includes: a power generation element having a structure in which battery cells are laminated, each of the battery cells including an electrode layer, a counter electrode layer, and a solid electrolyte layer located between the electrode layer and the counter electrode layer, in which the power generation element includes a first pair of side surfaces facing each other, and a second pair of side surfaces facing each other and different from the first pair of side surfaces, at least one of the battery cells is provided with a recess where the solid electrolyte layer is receded with respect to the electrode layer and the counter electrode layer on each of the first pair of side surfaces, and surface roughness Rz₂ of each of the second pair of side surfaces is smaller than surface roughness Rz₁ of each of the first pair of side surfaces.

In the case of forming the battery by cutting end portions of the battery cells as mentioned above, the recesses are formed on cut surfaces when the laminated body is pressed in the direction of lamination in order to increase productivity, for example. The productivity of the battery can be increased by using these cut surfaces as the first pair of side surfaces without change.

Meanwhile, when the extraction terminals are provided to the first pair of side surfaces provided with the recess as described above, portions of the electrode layer and the counter electrode layer projecting from the solid electrolyte layer at the recess are prone to breakage and disintegration. Hence, the disintegrated material may come into contact with the extraction terminal, thereby causing a short circuit easily. Meanwhile, in a case of covering one of the electrode layer and the counter electrode layer that are adjacent to each other with an insulating member so as to avoid contact with the extraction terminal, it is difficult to cover the electrode layer or the counter electrode layer with the insulating member since the solid electrolyte layer recedes at the recess. Hence, there is a possibility to cause a covering failure. On the other hand, the second pair of side surfaces are flatter than the first pair of side surfaces. Accordingly, it is less likely to cause the disintegration and the covering failure of the insulating member as described above in the course of providing a terminal electrode, so that the occurrence of a short circuit can be suppressed.

As described above, the power generation element includes the first pair of side surfaces that can be formed efficiently, and also the second pair of side surfaces that can suppress the occurrence of a short circuit even when the extraction terminals are provided. Accordingly, the battery according to this aspect can achieve high reliability and high productivity at the same time.

For example, the battery may further include: a first terminal electrode that covers the counter electrode layer and is electrically connected to the counter electrode layer on a first side surface being one of the second pair of side surfaces.

Accordingly, the first terminal electrode is provided to the second pair of side surfaces that are flatter than the first pair of side surfaces. Thus, a short circuit through the first terminal electrode attributed to the asperities on the side surface is suppressed.

For example, the battery may further include: a first insulating member that covers the electrode layer on the first side surface.

Accordingly, the first terminal electrode is kept from coming into contact with the electrode layer. The first insulating member is provided on the second pair of side surfaces that are flatter than the first pair of side surfaces. Thus, a covering failure of the first insulating member attributed to the asperities on the side surface is less likely to occur.

For example, the first terminal electrode may cover the first insulating member.

In this way, the first terminal electrode is located on an outer side of the first insulating member, so that a current can be easily extracted from the first side surface side of the power generation element. For this reason, it is possible to simplify wiring to be connected to the first terminal electrode and a wiring failure is less likely to occur.

For example, the first insulating member may cover at least part of the solid electrolyte layer on the first side surface.

Accordingly, by forming the first insulating member in such a way as to cover part of the solid electrolyte layer, it is possible to suppress exposure of the electrode layer without being covered with the first insulating member even in a case where there is a variation in size of the first insulating member.

For example, the battery may further include: a second terminal electrode that covers the electrode layer and is electrically connected to the electrode layer on a second side surface being another one of the second pair of side surfaces.

Accordingly, the second terminal electrode is provided to the second pair of side surfaces that are flatter than the first pair of side surfaces. Thus, a short circuit through the second terminal electrode attributed to the asperities on the side surface is suppressed. In the meantime, the first terminal electrode is provided on the first side surface while the second terminal electrode is provided on the second side surface facing the first side surface. As a consequence, the first terminal electrode and the second terminal electrode are less likely to come into contact with each other, so that a short circuit can be suppressed.

For example, the first pair of side surfaces may be provided without terminal electrodes that are electrically connected to the electrode layer and the counter electrode layer.

Accordingly, it is possible to prevent the occurrence of a short circuit through the terminal electrode attributed to the recess.

For example, the battery may further include: a second insulating member that covers a third side surface being one of the first pair of side surfaces.

Accordingly, the third side surface provided with the recess is protected by the second insulating member.

For example, the second insulating member may enter the recess.

Accordingly, bonding strength between the third side surface and the first insulating member is increased.

For example, a length of each of the second pair of side surfaces may be larger than a length of each of the first pair of side surfaces in directions along an outer periphery of the power generation element when viewed in a direction of lamination.

Accordingly, the second pair of side surfaces for establishing connection to the extraction terminal while suppressing the occurrence of a short circuit are increased in size. Thus, it is possible to reduce electrical resistance in connecting the extraction terminal.

For example, the recess may have a tapered shape.

Accordingly, an angle at a corner portion of the recess is increased and the electrode layer and the counter electrode layer are less likely to be disintegrated. Thus, it is possible to suppress a short circuit attributed to disintegration.

For example, the solid electrolyte layer may contain a solid electrolyte provided with lithium-ion conductivity.

Accordingly, a lithium-ion battery containing the solid electrolyte can achieve high reliability and high productivity.

A method for manufacturing a battery according to an aspect of the present disclosure includes: a first cutting step of forming second laminated bodies by cutting at least one first laminated body including an electrode layer, a counter electrode layer, and a solid electrolyte layer located between the electrode layer and the counter electrode layer, in which a first pair of cut surfaces facing each other are provided to each of the second laminated bodies by cutting the at least one first laminated body in such a way as to cut the electrode layer, the counter electrode layer, and the solid electrolyte layer collectively; a laminating step of forming a third laminated body by laminating the second laminated bodies such that the respective first pairs of cut surfaces of the second laminated bodies face in the same directions; and a second cutting step of forming a fourth laminated body by cutting the third laminated body, in which a second pair of cut surfaces facing each other and extending in a direction intersecting the first pair of cut surfaces are provided to the fourth laminated body by cutting the third laminated body in such a way as to cut the second laminated bodies collectively.

Accordingly, the multiple second laminated bodies can be efficiently manufactured by cutting the at least one first laminated body in the first cutting step. Moreover, in the laminating step, the multiple second laminated bodies are laminated such that the respective second pair of cut surfaces of the multiple second laminated bodies face in the same directions, so that the second pair of cut surfaces can be used as the side surfaces of the power generation element of the manufactured battery and the number of times of cutting operations can be reduced. Furthermore, in the second cutting step, the multiple second laminated bodies that are laminated are cut out collectively. Thus, it is possible to form the second pair of cut surfaces with less asperities. Provision of the terminal electrodes to the second pair of cut surfaces as described above can improve reliability of the battery. As a consequence, the method for manufacturing a battery according to this aspect can achieve high reliability and high productivity of the battery at the same time.

For example, the at least one first laminated body may cut in the first cutting step while applying a first pressure in a direction of lamination to the at least one first laminated body, and the third laminated body may be cut in the second cutting step by applying no pressure in the direction of lamination to the third laminated body or applying a second pressure being smaller than the first pressure in the direction of lamination to the third laminated body.

Accordingly, in the first cutting step, it is possible to cut the first laminated body at high positional accuracy and in a short time by cutting the first laminated body while applying the first pressure in the direction of lamination to the first laminated body. Meanwhile, in the second cutting step, the pressure and a load to be applied to the third laminated body are smaller than the first pressure. Thus, extension of the solid electrolyte layer at the time of cutting due to the pressure and the load applied to the third laminated body is suppressed, and the recesses are less likely to be formed after releasing the pressure and the load. As a consequence, the flatter second pair of cut surfaces are formed.

For example, the at least one laminated body may be a single laminated body, and the second laminated bodies may be formed in the first cutting step by cutting and dividing the single first laminated body into a plurality of laminated bodies.

Accordingly, it is possible to form the multiple second laminated bodies by using the single first laminated body produced collectively. Thus, productivity of the battery can be improved.

An embodiment of the present disclosure will be specifically described below with reference to the drawings.

Note that each embodiment described below represents a comprehensive or specific example. Numerical values, shapes, materials, constituents, layout positions and modes of connection of the constituents, steps, the order of the steps, and the like depicted in the following embodiment are examples and are not intended to restrict the present disclosure. Meanwhile, of the constituents in the following embodiment, a constituent not defined in an independent claim will be described as an optional constituent.

In the meantime, the respective drawings are schematic diagrams and are not always illustrated precisely. Accordingly, scales and other factors do not always coincide with one another in the respective drawings, for example. Moreover, in the respective drawings, the structures which are substantially the same are denoted by the same reference signs and overlapping explanations thereof may be omitted or simplified.

In the present specification and the drawings, x axis, y axis, and z axis represent three axes of a three-dimensional orthogonal coordinate system. In a case where a shape in plan view of a power generation element of a battery is a rectangle, the x axis and the y axis coincide with directions parallel to a first side of the rectangle and to a second side being orthogonal to the first side, respectively. The z axis coincides with a direction of lamination of multiple battery cells included in the power generation element.

The "direction of lamination" in the present specification coincides with a direction of a line normal to principal surfaces of current collectors and active material layers. Moreover, "plan view" in the present specification means a view in a direction perpendicular to a principal surface of the power generation element unless otherwise stated such as a case where the term is used alone. Here, in a case of description of "plan view of a certain surface" such as "plan view of a side surface", the term means a view from the front of the "certain surface".

In the present specification, terms "above" and "below" do not represent an upward direction (vertically upward) or a downward direction (vertically downward) in light of absolute spatial recognition, but are used as terms to be defined depending on a relative positional relationship based on the order of lamination in a laminated structure. Moreover, the terms "above" and "below" are used not only in a case where two constituents are disposed with an interval therebetween and another constituent is present between these two constituents, but also in a case where two constituents are disposed close to each other and the two constituents are in contact with each other. In the following description, a negative side of the z axis will be referred to as "below" or a "lower side" while a positive side of the z axis will be referred to as "above" or an "upper side".

### (Embodiment)

First, a configuration of a battery according to an embodiment will be described.

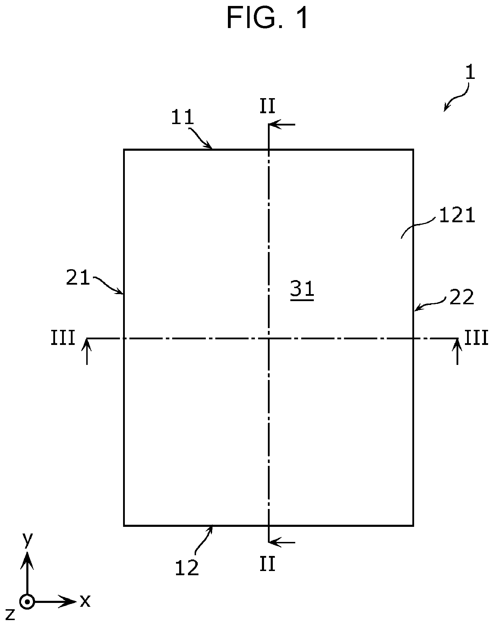

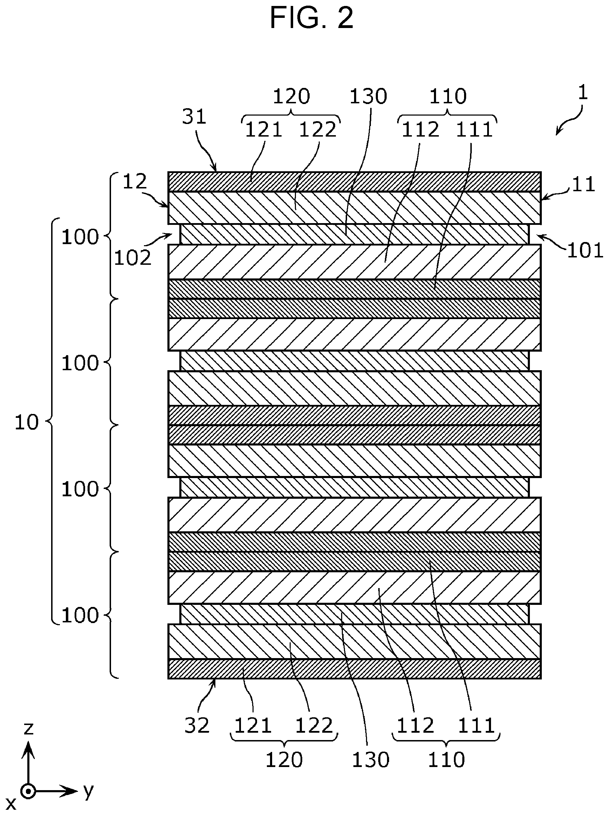

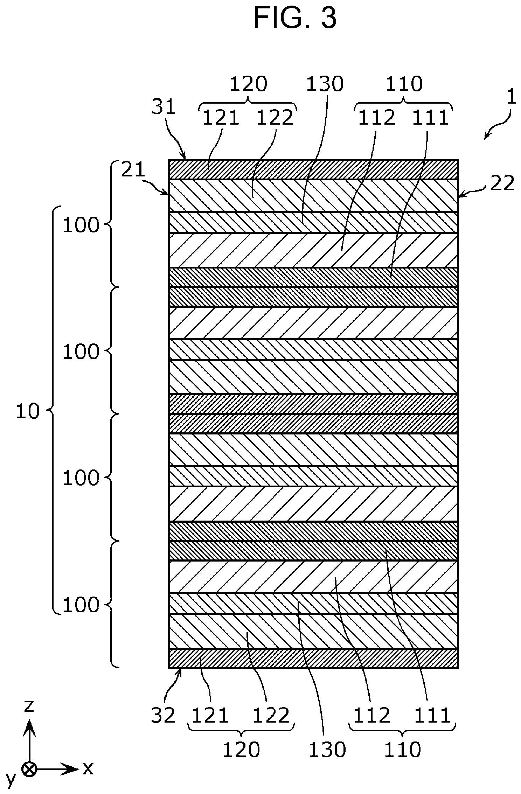

Fig. 1 is a top view of a battery 1 according to the embodiment. Figs. 2 and 3 are sectional views illustrating a sectional structure of the battery 1 according to the embodiment. Note that Fig. 2 illustrates the section taken along the II-II line in Fig. 1. Meanwhile, Fig. 3 illustrates the section taken along the III-III line in Fig. 1.

As illustrated in Figs. 1 to 3, the battery 1 includes a power generation element 10 having a structure of laminating multiple battery cells 100. The battery 1 is an all-solid-state battery, for example.

As illustrated in Fig. 1, a shape in plan view of the power generation element 10 is a rectangle, for example. The shape of the power generation element 10 is a flattened rectangular parallelepiped shape, for example. Here, the term "flattened" means that a thickness (that is, a length in z-axis direction) is shorter than the respective sides (that is, respective lengths in x-axis direction and y-axis direction) or a maximum width of the principal surface. The shape in plan view of the power generation element 10 may be any of other quadrangles such as a square, a parallelogram, and a rhombus, or any of other polygons such as a hexagon and an octagon. In the meantime, while the shape of the power generation element 10 is the rectangular parallelepiped, for example, the power generation element 10 may take on any of other shapes such as a cubic shape, a truncated quadrangular pyramidal shape, and a polygonal prismatic shape. Note that thicknesses of respective layers are illustrated in an exaggerated manner in the sectional views of Figs. 2, 3, and the like in the present specification in order to clarify a layer structure of the power generation element 10.

As illustrated in Figs. 1 to 3, the power generation element 10 includes a pair of side surfaces 11 and 12 facing each other which represent an example of a first pair of side surfaces, a pair of side surfaces 21 and 22 facing each other which represent an example of a second pair of side surfaces being different from the first pair of side surfaces, and two principal surfaces 31 and 32. The side surface 21 is an example of a first side surface. The side surface 22 is an example of a second side surface. The side surface 11 is an example of a third side surface. The side surfaces 11, 12, 21, and 22 are surfaces that are parallel to the direction of lamination (a direction of a line normal to the principal surfaces 31 and 32). Here, at least one of the side surfaces 11, 12, 21, and 22 may be inclined relative to the direction of lamination.

The side surfaces 11, 12, 21, and 22 are each a cut surface, for example. To be more precise, the side surfaces 11, 12, 21, and 22 are each a surface formed by being cut with a cutting blade or the like, and is a surface provided with cutting scars such as minute grooves.

The side surfaces 11 and 12 being the first pair of side surfaces are arranged back-to-back to each other and are parallel to each other. For example, shapes and sizes of the respective side surfaces 11 and 12 are the same, and respective outlines thereof coincide with each other in plan view of the side surface 11. The side surfaces 21 and 22 being the second pair of side surfaces are arranged back-to-back to each other and are parallel to each other. For example, shapes and sizes of the respective side surfaces 21 and 22 are the same, and respective outlines thereof coincide with each other in plan view of the side surface 21. Meanwhile, the side surfaces 11 and 12, and, the side surfaces 21 and 22, have a positional relationship that is perpendicular to each other, for example. In the case where the shape of the power generation element 10 is the rectangular parallelepiped, side surfaces of the power generation element 10 are formed from the side surfaces 11 and 12 that are parallel to each other and the side surfaces 21 and 22 that are parallel to each other.

The principal surfaces 31 and 32 are arranged back-to-back to each other and parallel to each other. The principal surface 31 is the uppermost surface of the power generation element 10. The principal surface 32 is the lowermost surface of the power generation element 10. As illustrated in Fig. 1, the principal surfaces 31 and 32 are each a rectangle, for example, and include two pairs of sides parallel to each other, namely, a pair of short sides and a pair of long sides.

In directions along an outer periphery of the power generation element 10 in a case of a view in the direction of lamination, lengths of the side surfaces 21 and 22 are larger than lengths of the side surfaces 11 and 12. In the present embodiment, the side surfaces 11 and 12 are each the side surface that includes the short side of the principal surface 31, and the side surfaces 21 and 22 are each the side surface that includes the long side of the principal surface 31. This configuration increases the side surfaces 21 and 22 for connecting extraction terminals while suppressing the occurrence of a short circuit as described later. Accordingly, it is possible to reduce electrical resistance in connecting the extraction terminals.

The power generation element 10 includes the multiple battery cells 100. The battery cell 100 is a minimum configuration battery which is also referred to as a unit cell. The multiple battery cells 100 are laminated in such a way as to be electrically connected in parallel. In the present embodiment, all the battery cells 100 included in the power generation element 10 are electrically connected in parallel. Although the number of pieces of the battery cells 100 included in the power generation element 10 is four pieces in the illustrated example, the number of pieces is not limited to this configuration. For example, the number of pieces of the battery cells 100 included in the power generation element 10 may be an even number of pieces such as two pieces and six pieces, or an odd number of pieces such as three pieces and five pieces.

Each of the multiple battery cells 100 includes an electrode layer 110, a counter electrode layer 120, and a solid electrolyte layer 130 located between the electrode layer 110 and the counter electrode layer 120. The electrode layer 110 includes an electrode current collector 111 and an electrode active material layer 112. The counter electrode layer 120 includes a counter electrode current collector 121 and a counter electrode active material layer 122. In each of the multiple battery cells 100, the electrode current collector 111, the electrode active material layer 112, the solid electrolyte layer 130, the counter electrode active material layer 122, and the counter electrode current collector 121 are laminated in this order along the z axis.

The electrode layer 110 is one of a positive electrode layer and a negative electrode layer of the battery cell 100. The counter electrode layer 120 is the other one of the positive electrode layer and the negative electrode layer of the battery cell 100. In the following, a description will be given of an example in which the electrode layer 110 is the negative electrode layer and the counter electrode layer 120 is the positive electrode layer. Here, the electrode layer 110 may be the positive electrode layer and the counter electrode layer 120 may be the negative electrode layer.

Configurations of the multiple battery cells 100 are substantially the same as one another. In the two battery cells 100 adjacent to each other, the order of arrangement of the respective layers constituting the battery cell 100 are inverted. In other words, the multiple battery cells 100 are laminated in arrangement along the z axis while alternately inverting the order of arrangement of the respective layers constituting the battery cell 100. Accordingly, the multiple battery cells 100 are laminated in such a way as to connect electrodes of the same polarity of the adjacent battery cells 100 to each other. To be more precise, the electrode current collectors 111 or the counter electrode current collectors 121 of the adjacent battery cells 100 come into contact with each other and are electrically connected to each other. The adjacent battery cells 100 may be laminated through an adhesive layer formed from a conductive adhesive and the like. Alternatively, the adjacent battery cells 100 may share the single electrode current collector 111 or the single counter electrode current collector 121. That is to say, in the power generation element 10, the electrode active material layers 112 may be in contact with two principal surfaces of the single electrode current collector 111, or the counter electrode active material layers 122 may be in contact with two principal surfaces of the single counter electrode current collector 121. Meanwhile, since the number of pieces of the battery cells 100 is the even number of pieces in the present embodiment, the lowermost layer and the uppermost layer of the power generation element 10 are formed from the current collectors of the same polarity, respectively.

The solid electrolyte layer 130 is disposed between the electrode active material layer 112 and the counter electrode active material layer 122. The solid electrolyte layer 130 comes into contact with each of the electrode active material layer 112 and the counter electrode active material layer 122. A thickness of the solid electrolyte layer 130 is greater than or equal to 5 µm and less than or equal to 150 µm, for example.

The solid electrolyte layer 130 contains at least a solid electrolyte and may contain a binder material as needed. The solid electrolyte layer 130 may contain a solid electrolyte provided with lithium-ion conductivity.

Publicly known materials including a lithium-ion conductor, a sodium ion conductor, a magnesium ion conductor, and the like can be used as the solid electrolyte. For example, solid electrolyte materials including sulfide solid electrolytes, halogen solid electrolytes, oxide solid electrolytes, and the like are used as the solid electrolyte. In the case of a material that can transmit lithium ions, a composite formed from lithium sulfide (Li₂S) and phosphorus pentasulfide (P₂S₅) is used as the sulfide solid electrolyte, for example. Meanwhile, a sulfide such as Li₂S-SiS₂, Li₂S-B₂S₃, and Li₂S-GeS₂ may be used as the sulfide solid electrolyte, or a sulfide formed by adding at least one of Li₃N, LiCl, LiBr, Li₃PO₄, and Li₄SiO₄ as an additive to any of the aforementioned sulfides may be used as the sulfide solid electrolyte.

In the case of a material that can transmit lithium ions, Li₇La₃Zr₂O₁₂ (LLZ), Li_{1.3}Al_{0.3}Ti_{1.7}(PO₄)₃ (LATP), (La, Li)TiO₃ (LLTO), and the like are used as the oxide solid electrolyte.

Elastomers are used as the binder material, for example. An organic compound such as polyvinylidene fluoride, acrylic resin, and cellulose resin may also be used.

The electrode active material layer 112 is in contact with a principal surface of the electrode current collector 111. Here, the electrode current collector 111 may include a current collector layer which is a layer containing a conductive material and provided at a portion in contact with the electrode active material layer 112.

The counter electrode active material layer 122 is in contact with a principal surface of the counter electrode current collector 121. Here, the counter electrode current collector 121 may include a current collector layer which is a layer containing a conductive material and provided at a portion in contact with the counter electrode active material layer 122.

Publicly known materials can be used as respective materials of the electrode current collector 111 and the counter electrode current collector 121. For example, a foil-like body, a plate-like body, a mesh-like body, and the like made of copper, aluminum, nickel, iron, stainless steel, platinum, gold, or an alloy of two or more types of these metals, are used as the respective materials of the electrode current collector 111 and the counter electrode current collector 121. A thickness of each of the electrode current collector 111 and the counter electrode current collector 121 is greater than or equal to 5 µm and less than or equal to 100 µm, for example. However, the thickness is not limited to this range.

Here, the electrode layer 110 need not include the electrode current collector 111. For example, the current collector of the electrode layer 110 or the counter electrode layer 120 of a different battery cell 100, an extraction terminal, a connection layer to a different battery, or the like may function as the current collector of the electrode active material layer 112. That is to say, the electrode layer 110 may include only the electrode active material layer 112 out of the electrode current collector 111 and the electrode active material layer 112. Meanwhile, the counter electrode layer 120 need not include the counter electrode current collector 121. For example, the current collector of the electrode layer 110 or the counter electrode layer 120 of a different battery cell 100, an extraction terminal, a connection layer to a different battery, or the like may function as the current collector of the counter electrode active material layer 122. That is to say, the counter electrode layer 120 may include only the counter electrode active material layer 122 out of the counter electrode current collector 121 and the counter electrode active material layer 122.

The electrode active material layer 112 is disposed at a principal surface on the counter electrode layer 120 side of the electrode current collector 111. The electrode active material layer 112 is disposed to face the counter electrode active material layer 122. A thickness of the electrode active material layer 112 is greater than or equal to 5 µm and less than or equal to 300 µm, for example. However, the thickness is not limited to this range.

The electrode active material layer 112 contains at least a negative electrode active material, and may include at least one of a solid electrolyte, a conductive agent, and a binder material as needed. Publicly known materials that can absorb and desorb (insert and extract, or dissolve and precipitate) lithium ions, sodium ions, or magnesium ions can be used as the negative electrode active material. In the case of the material that can extract and insert the lithium ions, a carbon material such as natural graphite, artificial graphite, graphite carbon fibers and resin heat-treated carbon, metallic lithium, a lithium alloy, or an oxide of lithium and a transition metal element can be used as the negative electrode active material, for example.

The solid electrolyte can adopt the above-mentioned solid electrolyte materials. Meanwhile, the conductive agent can adopt a conductive material such as acetylene black, carbon black, graphite, and carbon fibers. In the meantime, the binder material can adopt the above-mentioned binder materials.

A coating in paste form obtained by kneading the materials contained in the electrode active material layer 112 together with a solvent is coated on the principal surface of the electrode current collector 111 and is subjected to drying. Thus, the electrode active material layer 112 is produced. In order to increase a density of the electrode active material layer 112, the electrode layer 110 (also referred to as an electrode plate) including the electrode active material layer 112 and the electrode current collector 111 may be pressed after the drying.

The counter electrode active material layer 122 is disposed at a principal surface on the electrode layer 110 side of the counter electrode current collector 121. A thickness of the counter electrode active material layer 122 is greater than or equal to 5 µm and less than or equal to 300 µm, for example. However, the thickness is not limited to this range.

The counter electrode active material layer 122 contains at least a positive electrode active material, and may include at least one of a solid electrolyte, a conductive agent, and a binder material as needed.

Publicly known materials that can absorb and desorb (insert and extract, or dissolve and precipitate) lithium ions, sodium ions, or magnesium ions can be used as the positive electrode active material. In the case of the material that can extract and insert the lithium ions, lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), lithium-nickel-manganese-cobalt composite oxide (LNMCO), and the like can be used as the positive electrode active material, for example.

The solid electrolyte can adopt the above-mentioned solid electrolyte materials. Meanwhile, the conductive agent can adopt the above-mentioned conductive materials. In the meantime, the binder material can adopt the above-mentioned binder materials.

A coating in paste form obtained by kneading the materials contained in the counter electrode active material layer 122 together with a solvent is coated on the principal surface of the counter electrode current collector 121 and is subjected to drying. Thus, the counter electrode active material layer 122 is produced. In order to increase a density of the counter electrode active material layer 122, the counter electrode layer 120 (also referred to as a counter electrode plate) including the counter electrode active material layer 122 and the counter electrode current collector 121 may be pressed after the drying.

In the present embodiment, the electrode active material layer 112, the counter electrode active material layer 122, and the solid electrolyte layer 130 are maintained in the form of parallel flat plates. In this way, it is possible to suppress the occurrence of breakage or disintegration due to curvature. Here, the electrode active material layer 112, the counter electrode active material layer 122, and the solid electrolyte layer 130 may be smoothly curved altogether.

Meanwhile, in the present embodiment, a side surface on the side surface 21 side of the solid electrolyte layer 130 coincides with respective side surfaces on the side surface 21 side of the electrode current collector 111, the electrode active material layer 112, the counter electrode active material layer 122, and the counter electrode current collector 121 when viewed in the z-axis direction. The same applies to respective side surfaces on the side surface 22 side of the electrode current collector 111, the electrode active material layer 112, the solid electrolyte layer 130, the counter electrode active material layer 122, and the counter electrode current collector 121.

In the meantime, when viewed in the z-axis direction, a side surface on the side surface 11 side of the solid electrolyte layer 130 is located inside of respective side surfaces on the side surface 11 of the electrode current collector 111, the electrode active material layer 112, the counter electrode active material layer 122, and the counter electrode current collector 121. The same applies to respective side surfaces on the side surface 12 side of the electrode current collector 111, the electrode active material layer 112, the solid electrolyte layer 130, the counter electrode active material layer 122, and the counter electrode current collector 121.

In the battery cell 100, respective shapes and sizes of the electrode current collector 111, the electrode active material layer 112, the counter electrode active material layer 122, and the counter electrode current collector 121 are the same, and respective outlines thereof coincide with one another when viewed in the z-axis direction.

Meanwhile, when viewed in the z-axis direction, the side surfaces of the multiple battery cells 100 are joined to one another on the respective side surfaces 11, 12, 21, and 22, and no steps are formed at boundaries of the adjacent battery cells 100. Here, on the side surfaces 11 and 12, the respective side surfaces of the multiple battery cells 100 do not have to be joined to each other.

In the side surfaces 11, 12, 21, and 22, the respective side surfaces of the electrode current collector 111, the electrode active material layer 112, the solid electrolyte layer 130, the counter electrode active material layer 122, and the counter electrode current collector 121 are exposed. The electrode current collector 111, the electrode active material layer 112, the solid electrolyte layer 130, the counter electrode active material layer 122, and the counter electrode current collector 121, respectively, are disposed so as not to overlap one another when viewed in a direction perpendicular to the direction of lamination. Here, the exposed side surfaces may be covered with the extraction terminal, an insulating member, and the like. In other words, the above-mentioned expression "exposed" means that each of the layers laminated in the power generation element 10 does not cover any of the side surfaces of the other layers.

Meanwhile, on the side surfaces 11 and 12, each of the multiple battery cells 100 is provided with recesses 101 and 102 in which the solid electrolyte layer 130 is recessed relative to the electrode layer 110 and the counter electrode layer 120, or more specifically, relative to the electrode active material layer 112 and the counter electrode active material layer 122 as illustrated in Fig. 2. Each of the recesses 101 and 102 is a recess that has a stepped shape. The side surface 11 is provided with the recess 101 while the side surface 12 is provided with the recess 102. In the case of forming the battery by cutting end portions of the laminated body in which the respective layers of the battery cells 100 are laminated, the recesses 101 and 102 in which the solid electrolyte layers 130 recede with respect to the electrode active material layers 112 and the counter electrode active material layers 122 are formed on cut surfaces when the laminated body in which the respective layers of the battery cells 100 are laminated are cut out while pressing the laminated body in the direction of lamination in order to increase productivity, for example. The productivity of the battery 1 can be increased by using these cut surfaces as the side surfaces 11 and 12 without change. A cutting method of the laminated body will be described later in detail.

A depth of each of the recesses 101 and 102 is greater than or equal to 5 µm and less than or equal to 20 µm, for example.

On the other hand, the side surfaces 21 and 22 are not provided with any recesses as illustrated in Fig. 3. Each of the side surfaces 21 and 22 is substantially a flat surface. Surface roughness Rz₂ of each of the side surfaces 21 and 22 is smaller than surface roughness Rz₁ of each of the side surfaces 11 and 12. That is to say, each of the side surfaces 21 and 22 has smaller asperities than those on each of the side surfaces 11 and 12, or virtually has no asperities. Here, each of the surface roughness Rz₁ and Rz₂ is a ten-point average surface roughness measured in accordance with a measurement method that is compliant with JIS B0601 1994. In the case where the side surfaces 21 and 22 are formed from cut surfaces obtained by cutting the laminated body in which the respective layers of the power generation element 10 are laminated, for example, the cut surfaces provided with no recesses are formed by cutting in accordance with such a method or under such conditions that bring about flat cut surfaces. Details of the method of cutting the laminated body will be described later. Here, the side surfaces 21 and 22 may be provided with recesses having smaller depths than those of the recesses 101 and 102.

The surface roughness Rz₁ of each of the side surfaces 11 and 12 is greater than or equal to 5 µm and less than or equal to 20 µm, for example. Meanwhile, the surface roughness Rz₂ of each of the side surfaces 21 and 22 is greater than or equal to 0.1 µm and less than or equal to 5 µm, for example.

As described above, the power generation element 10 of the battery 1 includes the side surfaces 11 and 12 provided with the recesses 101 and 102, and the side surfaces 21 and 22 flatter than the side surfaces 11 and 12. In the case of extracting the current from the power generation element 10, extraction terminals and the like are electrically connected one by one to the respective electrode layers 110 and the respective counter electrode layers 120 of the multiple battery cells 100 on the side surfaces of the power generation element 10, for example. In this instance, a short circuit occurs if an extraction terminal electrically connected to one of the electrode layer 110 and the counter electrode layer 120 is also electrically connected to the other.

When the extraction terminals are provided to the side surfaces 11 and 12, portions of the electrode layers 110 and the counter electrode layers 120 projecting from the solid electrolyte layers 130 at the recesses 101 and 102 are prone to breakage and disintegration, and the disintegrated material may come into contact with the extraction terminal, thereby causing a short circuit easily. Meanwhile, in a case of covering one of the electrode layer 110 and the counter electrode layer 120 that are adjacent to each other with an insulating member so as to avoid contact with the extraction terminal, it is difficult to cover the electrode layer 110 or the counter electrode layer 120 with the insulating member since the solid electrolyte layers 130 recede at the recesses 101 and 102, and there is a possibility to cause a covering failure. On the other hand, the side surfaces 21 and 22 are flatter than the side surfaces 11 and 12, and it is less likely to cause the disintegration and the covering failure of the insulating member as described above in the course of providing a terminal electrode, so that the occurrence of a short circuit can be suppressed.

As described above, the power generation element 10 includes the side surfaces 11 and 12 that can be formed efficiently, and the side surfaces 21 and 22 that can suppress the occurrence of a short circuit even when the extraction terminals are provided. Accordingly, the battery 1 can achieve high reliability and high productivity at the same time.

Here, the extraction terminals can also be used for voltage monitoring and the like regarding the respective battery cells 100 of the power generation element 10.

### [Modified Example 1]

Next, modified example 1 of the embodiment will be described. The following description of the modified example will mainly discuss different features from the embodiment, and explanations of the features in common will be omitted or simplified.

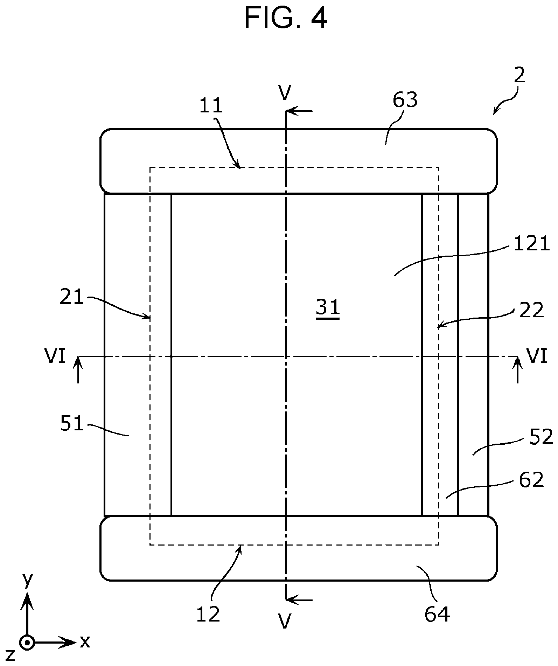

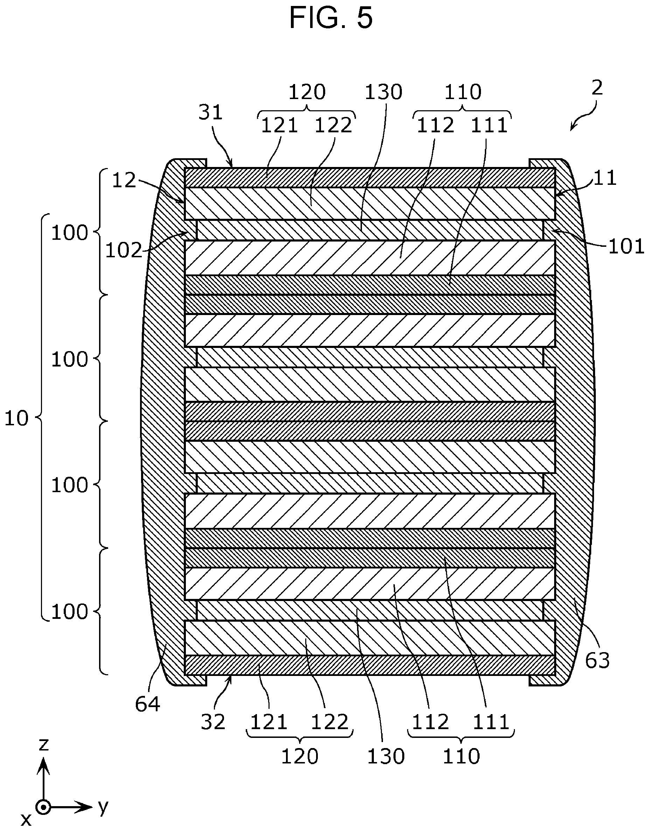

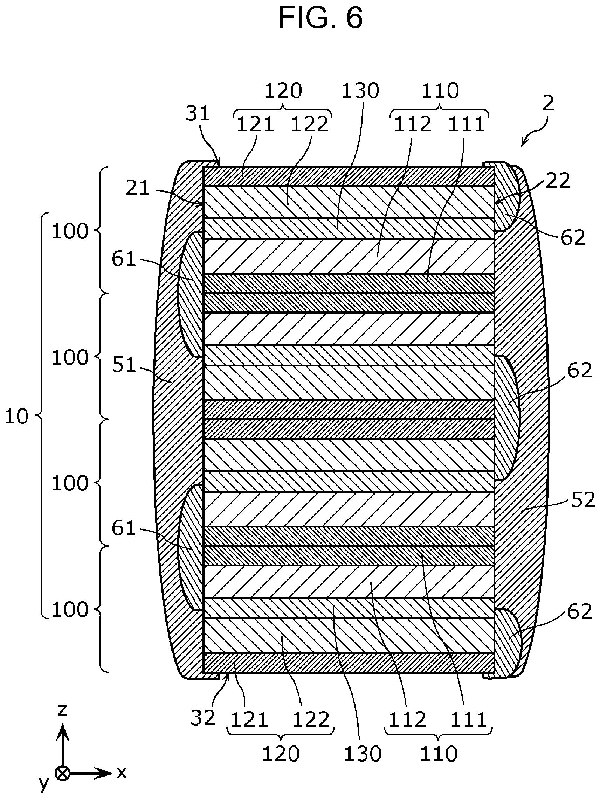

Fig. 4 is a top view of a battery 2 according to the present modified example. Figs. 5 and 6 are sectional views illustrating a sectional structure of the battery 2 according to the present modified example. Note that Fig. 5 illustrates the section taken along the V-V line in Fig. 4. Meanwhile, Fig. 6 illustrates the section taken along the VI-VI line in Fig. 4.

As illustrated in Figs. 4 to 6, the battery 2 includes a counter electrode terminal 51, an electrode terminal 52, and insulating members 61, 62, 63, and 64 in addition to the structure of the battery 1 according to the embodiment. That is to say, the battery 2 includes the power generation element 10, the counter electrode terminal 51, the electrode terminal 52, and the insulating members 61, 62, 63, and 64. The counter electrode terminal 51 is an example of a first terminal electrode. The electrode terminal 52 is an example of a second terminal electrode. The insulating member 61 is an example of a first insulating member. The insulating member 63 is an example of a second insulating member.

As illustrated in Fig. 5, the side surfaces 11 and 12 are not provided with any extraction terminals like the counter electrode terminal 51 and the electrode terminal 52 to be electrically connected to the electrode layer 110 and the counter electrode layer 120, respectively. This configuration makes it possible to prevent the occurrence of a short circuit through an extraction terminal attributed to the recesses 101 and 102.

The insulating member 63 covers the side surface 11 and enters the recess 101. To be more precise, the insulating member 63 covers the entire side surface 11. For example, the side surface 11 is covered solely with the insulating member 63 and is in contact only with the insulating member 63. The insulating member 63 that covers the side surface 11 protects the side surface 11, so that the insulating member 63 can suppress the breakage of the electrode active material layer 112 and the counter electrode active material layer 122 which are prone to breakage due to formation of the recess 101. Meanwhile, bonding strength between the side surface 11 and the insulating member 63 is increased by the insulating member 63 entering the recess 101. Moreover, the insulating member 63 is less likely to be detached from the side surface 11 against a stress in the z-axis direction.

In the meantime, the insulating member 63 covers an end portion of the principal surface 31 and an end portion of the principal surface 32 in the vicinity of upper and lower ends of the side surface 11. In this way, the insulating member 63 suppresses detachment of the counter electrode current collectors 121. Moreover, even in the case where the electrode terminal 52 approaches the principal surfaces 31 and 32, it is possible to keep the electrode terminal 52 from coming into contact with the counter electrode current collector 121 and causing a short circuit.

The insulating member 64 covers the side surface 12 and enters the recess 102. To be more precise, the insulating member 64 covers the entire side surface 12. For example, the side surface 12 is covered solely with the insulating member 64 and is in contact only with the insulating member 64. The insulating member 64 that covers the side surface 12 protects the side surface 12, so that the insulating member 64 can suppress the breakage of the electrode active material layer 112 and the counter electrode active material layer 122 which are prone to breakage due to formation of the recess 102. Meanwhile, bonding strength between the side surface 12 and the insulating member 64 is increased by the insulating member 64 entering the recess 102. Moreover, the insulating member 64 is less likely to be detached from the side surface 12 against a stress in the z-axis direction.

In the meantime, the insulating member 64 covers an end portion of the principal surface 31 and an end portion of the principal surface 32 in the vicinity of upper and lower ends of the side surface 12. In this way, the insulating member 64 suppresses detachment of the counter electrode current collectors 121. Moreover, even in the case where the electrode terminal 52 approaches the principal surfaces 31 and 32, it is possible to keep the electrode terminal 52 from coming into contact with the counter electrode current collector 121 and causing a short circuit.

As illustrated in Fig. 6, the insulating member 61 covers the electrode layers 110 on the side surface 21. To be more precise, the insulating member 61 completely covers the electrode current collectors 111 and the electrode active material layers 112 included in the electrode layers 110 on the side surface 21.

The insulating member 61 covers the respective electrode layers 110 of the multiple battery cells 100 on the side surface 21. The insulating member 61 does not cover at least part of the respective counter electrode layers 120 of the multiple battery cells 100. In the present embodiment, the insulating member 61 does not cover the respective counter electrode layers 120 of the multiple battery cells 100. The insulating member 61 has a stripe shape in plan view of the side surface 21, for example.

In this instance, the insulating member 61 continuously covers the electrode layers 110 of two adjacent battery cells 100. To be more precise, the insulating member 61 covers a portion from at least part of the solid electrolyte layer 130 of one of the two adjacent battery cells 100 to at least part of the solid electrolyte layer 130 of the other one of the two adjacent battery cells 100.

As described above, the insulating member 61 coverts at least part of the solid electrolyte layers 130 on the side surface 21. To be more precise, outlines of the insulating member 61 overlap the solid electrolyte layers 130 in plan view of the side surface 21. Hence, a possibility of exposure of the electrode layers 110 is reduced even when a width (a length of the z-axis direction) varies due to a production tolerance of the insulating member 61. Accordingly, it is possible to suppress a short circuit between the electrode layer 110 and the counter electrode layer 120 through the counter electrode terminal 51 formed in such a way as to cover the insulating member 61. Moreover, there are minute asperities on the side surface of each solid electrolyte layer 130 formed from a powder material. For this reason, bonding strength of the insulating member 61 is increased as a consequence of the insulating member 61 entering the asperities, thereby improving reliability of insulation.

Here, the insulating member 61 may cover the entire solid electrolyte layers 130 on the side surface 21. To be more precise, an outline of the insulating member 61 may overlap a boundary between the solid electrolyte layer 130 and the counter electrode active material layer 122. On the other hand, it is not essential that the insulating member 61 covers part of the solid electrolyte layer 130. For example, the outline of the insulating member 61 may overlap a boundary between the solid electrolyte layer 130 and the electrode active material layer 112. Alternatively, the insulating member 61 may cover at least part of the counter electrode active material layer 122. That is to say, the insulating member 61 may cover a portion from the electrode layer 110 to part of the counter electrode layer 120 in the direction of lamination of the power generation element 10 on the side surface 21.

The insulating member 61 is separately provided to each counter electrode layer 120, for example. However, provision of the insulating member 61 is not limited to this configuration. For example, the insulating member 61 may be provided in the z-axis direction at an end portion in the y-axis direction of the side surface 21 in addition to the portions in the striped shape. That is to say, the shape of the insulating member 61 may be of a ladder shape in plan view of the side surface 21. As mentioned above, the insulating member 61 may cover part of the counter electrode current collectors 121.

As illustrated in Fig. 6, the insulating member 62 covers the counter electrode layers 120 on the side surface 22. To be more precise, the insulating member 62 completely covers the counter electrode current collectors 121 and the counter electrode active material layers 122 included in the counter electrode layers 120 on the side surface 22.

The insulating member 62 covers the respective counter electrode layers 120 of the multiple battery cells 100 on the side surface 22. The insulating member 62 does not cover at least part of the respective electrode layers 110 of the multiple battery cells 100. In the present embodiment, the insulating member 62 does not cover the respective electrode layers 110 of the multiple battery cells 100. The insulating member 62 has a stripe shape in plan view of the side surface 22, for example.

In this instance, the insulating member 62 continuously covers the counter electrode layers 120 of two adjacent battery cells 100. To be more precise, the insulating member 62 covers a portion from at least part of the solid electrolyte layer 130 of one of the two adjacent battery cells 100 to at least part of the solid electrolyte layer 130 of the other one of the two adjacent battery cells 100.

As described above, the insulating member 62 coverts at least part of the solid electrolyte layers 130 on the side surface 22. To be more precise, outlines of the insulating member 62 overlap the solid electrolyte layers 130 in plan view of the side surface 22. Hence, a possibility of exposure of the counter electrode layers 120 is reduced even when the width (the length of the z-axis direction) varies due to the production tolerance of the insulating member 62. Accordingly, it is possible to suppress a short circuit between the electrode layer 110 and the counter electrode layer 120 through the electrode terminal 52 formed in such a way as to cover the insulating member 62. Moreover, there are minute asperities on the side surface of each solid electrolyte layer 130 formed from the powder material. For this reason, the bonding strength of the insulating member 62 is increased as a consequence of the insulating member 62 entering the asperities, thereby improving reliability of insulation.

Here, the insulating member 62 may cover the entire solid electrolyte layers 130 on the side surface 22. To be more precise, an outline of the insulating member 62 may overlap a boundary between the solid electrolyte layer 130 and the electrode active material layer 112. On the other hand, it is not essential that the insulating member 62 covers part of the solid electrolyte layer 130. For example, the outline of the insulating member 62 may overlap a boundary between the solid electrolyte layer 130 and the counter electrode active material layer 122. Alternatively, the insulating member 62 may cover at least part of the electrode active material layer 112. That is to say, the insulating member 62 may cover a portion from the counter electrode layer 120 to part of the electrode layer 110 in the direction of lamination of the power generation element 10 on the side surface 22.

In the meantime, the insulating member 62 covers an end portion of the principal surface 31 and an end portion of the principal surface 32 in the vicinity of upper and lower ends of the side surface 22. In this way, the insulating member 62 suppresses detachment of the counter electrode current collectors 121. Moreover, even in the case where the electrode terminal 52 approaches the principal surfaces 31 and 32, it is possible to keep the electrode terminal 52 from coming into contact with the counter electrode current collector 121 and causing a short circuit.

The insulating member 62 is separately provided to each counter electrode layer 120, for example. However, provision of the insulating member 62 is not limited to this configuration. For example, the insulating member 62 may be provided in the z-axis direction at an end portion in the y-axis direction of the side surface 22 in addition to the portions in the striped shape. That is to say, the shape of the insulating member 62 may be of a ladder shape in plan view of the side surface 22. As mentioned above, the insulating member 62 may cover part of the electrode current collectors 111.

Each of the insulating members 61, 62, 63, and 64 is an insulating layer formed by using an insulating material having an electrical insulation property, for example. Each of the insulating members 61, 62, 63, and 64 contains a resin, for instance. The insulating members 61, 62, 63, and 64 are formed from a resin material containing the resin and a resin additive agent, for example. The resin is an epoxy-based or silicone-based resin, for instance. However, the resin is not limited to the foregoing. Here, an inorganic material may be used as the insulating material. A usable insulating material is selected based on various properties such as flexibility, a gas barrier property, shock resistance, and heat resistance. The insulating members 61, 62, 63, and 64 are formed by using the same material, but may also be formed from different materials. Meanwhile, each of the insulating members 61, 62, 63, and 64 may be linked to another one of them and formed integrally with each other. Thus, the power generation element 10 is strongly protected.

Next, the counter electrode terminal 51 and the electrode terminal 52 will be described.

As illustrated in Fig. 6, the counter electrode terminal 51 covers the counter electrode layers 120 on the side surface 21 and is electrically connected to the counter electrode layers 120. In the present embodiment, the counter electrode terminal 51 covers the side surface 21 and the insulating member 61. To be more precise, the counter electrode terminal 51 covers the insulating member 61 and a portion of the side surface 21 not covered with the insulating member 61. In this way, the counter electrode terminal 51 is located on an outer side of the insulating member 61, so that the current can be easily extracted from the side surface 21 side of the power generation element 10. For this reason, it is possible to simplify wiring to be connected to the counter electrode terminal 51 and a wiring failure is less likely to occur.

At the portion of the side surface 21 not covered with the insulating member 61, the counter electrode terminal 51 comes into contact with respective side surfaces of the counter electrode current collectors 121 and the counter electrode active material layers 122, and are electrically connected to the counter electrode layers 120. Since the counter electrode active material layer 122 is formed from a powder material, there are minute asperities as with the solid electrolyte layer 130. Bonding strength of the counter electrode terminal 51 is increased as a consequence of the counter electrode terminal 51 entering the asperities on the side surface of the counter electrode active material layer 122, thereby improving reliability of electrical connection.

The counter electrode terminal 51 is electrically connected to the respective counter electrode layers 120 of the multiple battery cells 100. That is to say, the counter electrode terminal 51 bears part of a function to electrically connect the respective battery cells 100 in parallel. As illustrated in Fig. 6, the counter electrode terminal 51 covers substantially the entire side surface 21 collectively. In the present embodiment, the counter electrode layer 120 is the positive electrode. Accordingly, the counter electrode terminal 51 functions as a positive extraction terminal electrode of the battery 2.

In the power generation element 10 according to the present embodiment, each of the uppermost layer and the lowermost layer is the counter electrode current collector 121. As illustrated in Fig. 6, in the vicinity of the upper and lower ends of the side surface 21, the counter electrode terminal 51 covers part of the principal surfaces of the counter electrode current collectors 121 located on the uppermost layer and the lowermost layer, respectively. That is to say, the counter electrode terminal 51 covers the respective end portions of the principal surfaces 31 and 32. Accordingly, the counter electrode terminal 51 is robust over an external force in the z-axis direction and the like, and is kept from detachment. Moreover, detachment of the counter electrode current collectors 121 is suppressed by the counter electrode terminal 51. In the meantime, a contact area between the counter electrode terminal 51 and the counter electrode current collector 121 is increased. Hence, contact resistance between the counter electrode terminal 51 and the counter electrode current collector 121 is reduced so that high-current characteristics can be improved. For instance, it is possible to charge the battery 2 quickly.

As illustrated in Fig. 6, the electrode terminal 52 covers the electrode layers 110 on the side surface 22 and is electrically connected to the electrode layers 110. In the present embodiment, the electrode terminal 52 covers the side surface 22 and the insulating member 62. To be more precise, the electrode terminal 52 covers the insulating member 62 and a portion of the side surface 22 not covered with the insulating member 62. In this way, the electrode terminal 52 is located on an outer side of the insulating member 62, so that the current can be easily extracted from the side surface 22 side of the power generation element 10. For this reason, it is possible to simplify wiring to be connected to the electrode terminal 52 and a wiring failure is less likely to occur. Moreover, since the electrode terminal 52 is provided on the side surface 22 facing the side surface 21 provided with the counter electrode terminal 51, the counter electrode terminal 51 and the electrode terminal 52 are less likely to come into contact with each other, so that a short circuit can be suppressed.

At the portion of the side surface 22 not covered with the insulating member 62, the electrode terminal 52 comes into contact with respective side surfaces of the electrode current collectors 111 and the electrode active material layers 112, and are electrically connected to the electrode layers 110. Since the electrode active material layer 112 is formed from the powder material, there are minute asperities as with the solid electrolyte layer 130. Bonding strength of the electrode terminal 52 is increased as a consequence of the electrode terminal 52 entering the asperities on the side surface of the electrode active material layer 112, thereby improving reliability of electrical connection.

The electrode terminal 52 is electrically connected to the respective electrode layers 110 of the multiple battery cells 100. That is to say, the electrode terminal 52 bears part of the function to electrically connecting the respective battery cells 100 in parallel. As illustrated in Fig. 6, the electrode terminal 52 covers substantially the entire side surface 22 collectively. In the present embodiment, the electrode layer 110 is the negative electrode. Accordingly, the electrode terminal 52 functions as a negative extraction terminal electrode of the battery 2.

The counter electrode terminal 51 and the electrode terminal 52 are formed by using a conductive resin material and the like. Alternatively, the counter electrode terminal 51 and the electrode terminal 52 may be formed by using a metal material such as a solder. A usable conductive material is selected based on various properties such as flexibility, a gas barrier property, shock resistance, heat resistance, and solder wettability. The counter electrode terminal 51 and the electrode terminal 52 are formed by using the same material, but may also be formed from different materials.

As described above, the counter electrode terminal 51 and the electrode terminal 52 are provided to the side surfaces 21 and 22, respectively, which have the smaller surface roughness Rz₂ than the surface roughness Rz₁ of the side surfaces 11 and 12. As a consequence, it is possible to suppress the occurrence of a short circuit through the counter electrode terminal 51 or the electrode terminal 52 due to the asperities such as the recesses 101 and 102. Thus, reliability of the battery 2 can be improved.

Meanwhile, the side surfaces 21 and 22 are also provided with the insulating members 61 and 62, which are provided in order to keep the counter electrode terminal 51 and the electrode terminal 52 from coming into contact with the electrode layer 110 or the counter electrode layer 120. Accordingly, covering failures of the electrode layer 110 and the counter electrode layer 120 with the insulating members 61 and 62 due to the asperities such as the recesses 101 and 102 are unlikely to occur. For example, the side surfaces 21 and 22 have substantially no steps, so that the insulating members 61 and 62 can be formed without exposing corner portions generated by steps of the electrode active material layer 112 and the counter electrode active material layer 122. Thus, reliability of the battery 2 can be improved.

In the meantime, each of the counter electrode terminal 51 and the electrode terminal 52 not only functions as the extraction terminal electrode of the battery 2 but also bears the function for connecting the multiple battery cells 100 in parallel. As illustrated in Fig. 6, the counter electrode terminal 51 and the electrode terminal 52 are formed in such a way as to cover the side surfaces 21 and 22 of the power generation element 10 in close contact, respectively, so that the volumes of these terminals can be reduced. That is to say, the compact extraction terminals are available as compared to the case of extending and using the current collectors as the extraction terminals as in the related art. Thus, it is possible to improve volumetric energy density of the battery 2.

Note that the counter electrode terminal 51 and the electrode terminal 52 may be independently provided to the electrode layer 110 and the counter electrode layer 120 of each of the multiple battery cells 100 without covering the insulating member 61 and the insulating member 62, respectively.

### [Modified Example 2]

Next, modified example 2 of the embodiment will be described. The following description of the modified example will mainly discuss different features from the embodiment, and explanations of the features in common will be omitted or simplified.

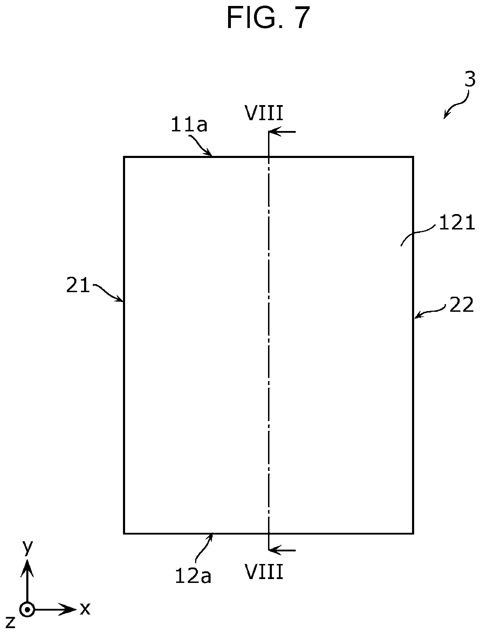

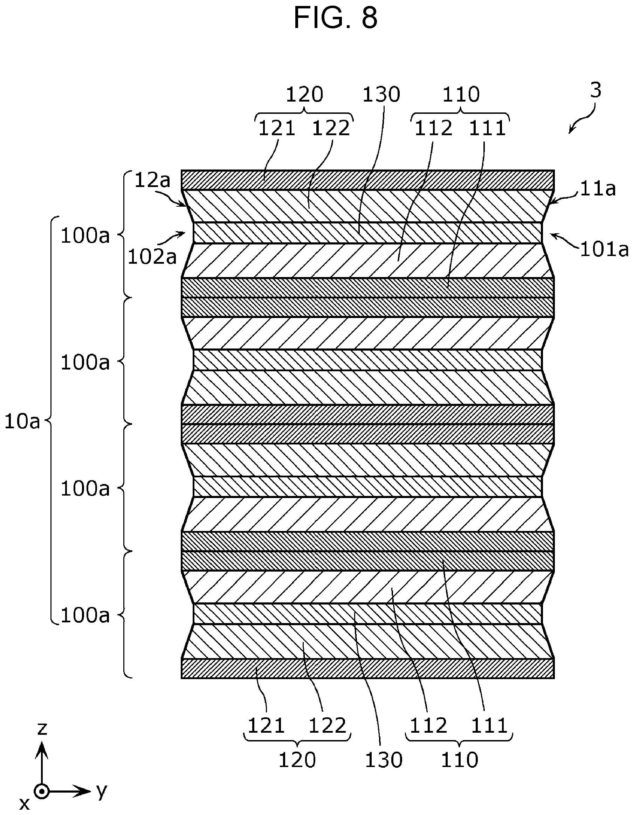

Fig. 7 is a top view of a battery 3 according to the present modified example. Fig. 8 is a sectional view illustrating a sectional structure of the battery 3 according to the present modified example. Note that Fig. 8 illustrates the section taken along the VIII-VIII line in Fig. 7.

As illustrated in Figs. 7 and 8, as compared to the battery 1 according to the embodiment, the battery 3 is different in that battery 3 includes a power generation element 10a provided with multiple battery cells 100a instead of the power generation element 10 provided with the multiple battery cells 100.

The power generation element 10a includes a pair of side surfaces 11a and 12a facing each other which represent the first pair of side surfaces, and the pair of side surfaces 21 and 22 facing each other which represent the second pair of side surfaces being different from the first pair of side surfaces. In the power generation element 10a as well, the surface roughness Rz₂ of each of the side surfaces 21 and 22 is smaller than the surface roughness Rz₁ of each of the side surfaces 11a and 12a as with the power generation element 10.

The battery cell 100a has the same structure as the battery cell 100 except that shapes of recesses 101a and 102a are different from those of the recesses 101 and 102.

On the side surfaces 11a and 12a, each of the multiple battery cells 100a is provided with recesses 101a and 102a in which the solid electrolyte layer 130 is recessed relative to the electrode layer 110 and the counter electrode layer 120, or more specifically, relative to the electrode active material layer 112 and the counter electrode active material layer 122 as illustrated in Fig. 8. Each of the recesses 101a and 102a is a recess that has a tapered shape. The side surface 11a is provided with the recess 101a while the side surface 12a is provided with the recess 102a. In the battery cell 100a, side surfaces of the electrode active material layer 112 and the counter electrode active material layer 122 are inclined toward side surfaces of the solid electrolyte layer 130 that recede compared to the electrode active material layer 112 and the counter electrode active material layer 122. The side surface 11a and the side surface 12a are not provided with a step that is bent at an angle less than or equal to a right angle. Here, a step may be provided to part of the recesses 101a and 102a. Meanwhile, at least one of the recesses 101a and 102a may be a recess that has a stepped shape like the recesses 101 and 102.

As described above, since the recesses 101a and 102a each have the tapered shape, the electrode layer 110 and the counter electrode layer 120 are less likely to cause disintegration in the recesses 101a and 102a, so that a short circuit attributed to disintegration can be suppressed.

Here, the battery 3 may also be provided with the counter electrode terminal 51, the electrode terminal 52, and the insulating members 61, 62, 63, and 64 as described in the modified example 1.

### [Method for manufacturing Battery]

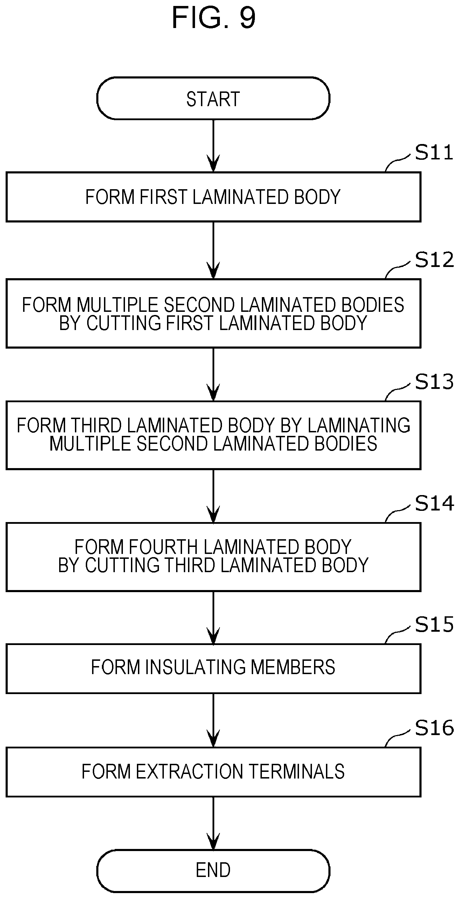

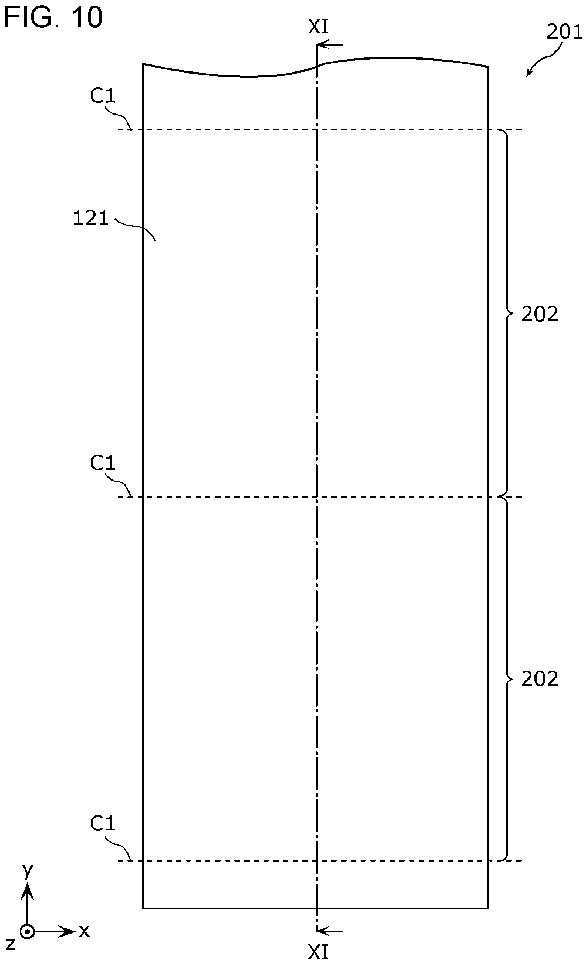

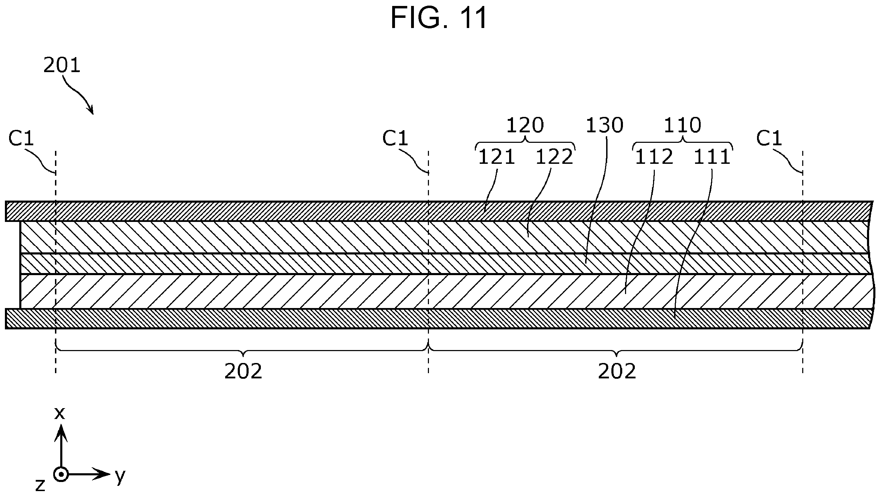

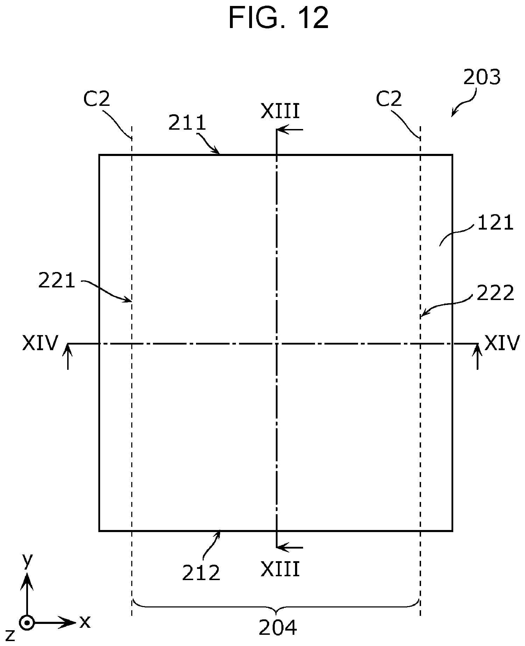

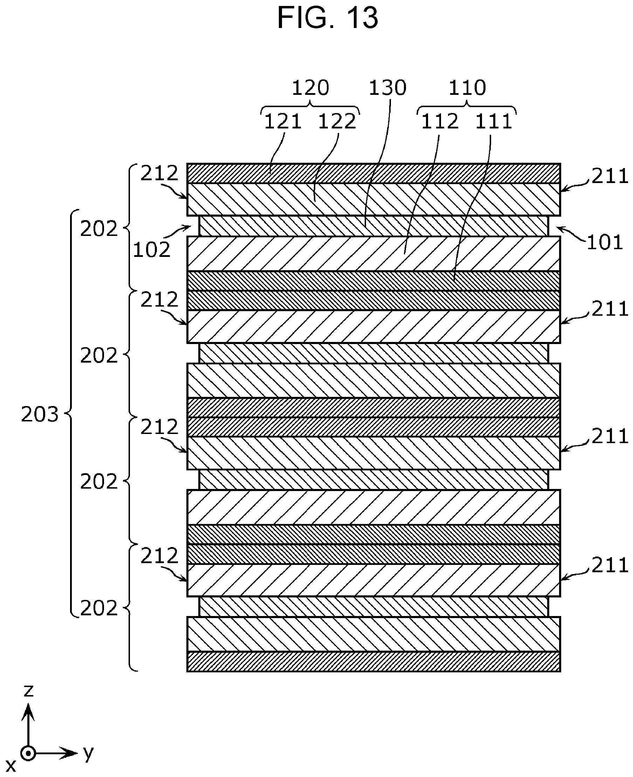

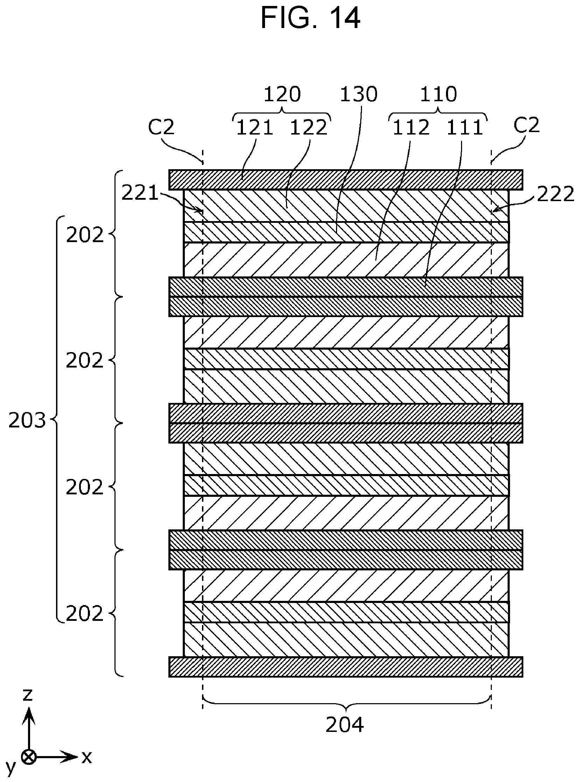

Next, a method for manufacturing a battery according to any of the embodiment and the modified examples will be described by using Figs. 9 to 14. Fig. 9 is a flowchart illustrating an example of the method for manufacturing a battery according to any of the embodiment and the modified examples. Fig. 10 is a top view of a first laminated body used in the method for manufacturing a battery according to any of the embodiment and the modified examples. Fig. 11 is a sectional view illustrating a sectional structure of the first laminated body used in the method for manufacturing a battery according to any of the embodiment and the modified examples. Fig. 12 is a top view of a third laminated body used in the method for manufacturing a battery according to any of the embodiment and the modified examples. Figs. 13 and 14 are sectional views illustrating a sectional structure of the third laminated body used in the method for manufacturing a battery according to any of the embodiment and the modified examples. Note that Fig. 11 illustrates the section taken along the XI-XI line in Fig. 10. Meanwhile, Fig. 13 illustrates the section taken along the XIII-XIII line in Fig. 12. In the meantime, Fig. 14 illustrates the section taken along the XIV-XIV line in Fig. 12.

The method for manufacturing the battery 1 according to the embodiment and the battery 2 according to the modified example 1 of the embodiment will be mainly described below.

As illustrated in Fig. 9, first, as a laminated body forming step, at least one first laminated body 201 including the electrode layer 110, the counter electrode layer 120, and the solid electrolyte layer 130 located between the electrode layer 110 and the counter electrode layer 120 is formed to begin with (step S11). Then, as a first cutting step, multiple second laminated bodies 202 are formed by cutting the at least one first laminated body 201 (step S12). In this instance, by cutting the first laminated body 201 in such a way as to cut the electrode layer 110, the counter electrode layer 120, and the solid electrolyte layer 130 collectively, each of the multiple second laminated bodies 202 is provided with a pair of cut surfaces 211 and 212 facing each other, which represents an example of a first pair of cut surfaces.

To be more precise, as illustrated in Figs. 10 and 11, the first laminated body 201 is formed to begin with. For example, the first laminated body 201 is formed by sequentially laminating the electrode current collector 111, the electrode active material layer 112, the solid electrolyte layer 130, the counter electrode active material layer 122, and the counter electrode current collector 121 in this order in the z-axis direction. The first laminated body 201 is formed by applying coating materials in paste form obtained by kneading respective materials of the electrode active material layer 112, the solid electrolyte layer 130, and the counter electrode active material layer 122 together with a solvent onto the current collector or surfaces of the respective layers, and then by drying the coatings. A screen-printing method, a dye coating method, a spraying method, a gravure printing method, and the like are used as a coating method for forming the electrode active material layer 112, the counter electrode active material layer 122, and the solid electrolyte layer 130. However, the coating method is not limited to these methods. Note that the lamination structure of the first laminated body 201 is not limited to the example illustrated in Fig. 11. For instance, a structure that lacks one of the electrode current collector 111 and the counter electrode current collector 121, or a structure in which active material layers and the like are laminated on two principal surfaces of one of the electrode current collector 111 and the counter electrode current collector 121 is also acceptable.

Alternatively, the first laminated body 201 may be formed by preparing the electrode plate by laminating the electrode current collector 111, the electrode active material layer 112, and the solid electrolyte layer 130 in this order and preparing the counter electrode plate by laminating the counter electrode current collector 121, the counter electrode active material layer 122, and the solid electrolyte layer 130 in this order, and then bonding the electrode plate to the counter electrode plate by the intermediary of the solid electrolyte layers 130.

In forming the respective layer and bonding the respective layers, presswork may be carried out in order to achieve densification and improvement in bonding strength. Flat plate pressing, roll pressing, or the like is used as a pressing method. However, the pressing method is not limited to these methods. The first laminated body 201 may be continuously formed in accordance with a roll-to-roll method of coating and laminating the respective layers as mentioned above, and then pressing the layers by roll pressing. In this case, the first laminated body 201 of an elongate belt-like shape as illustrated in Fig. 10 can be efficiently formed, for example.

Next, the first laminated body 201 thus formed is cut out in the direction of lamination at positions indicated with dashed lines C1 illustrated in Fig. 10, for example. The dashed lines C 1 are lines in a shorter direction of the first laminated body 201 in plan view of the first laminated body 201. The positions to cut the first laminated body 201 are parallel to one another, for example. In this way, the electrode layer 110, the counter electrode layer 120, and the solid electrolyte layer 130 are cut out collectively. Moreover, by cutting the first laminated body 201 collectively and at multiple positions as described above, the cut surfaces 211 and 212 (see Figs. 12 and 13) are provided as the first pair of cut surfaces to each of the multiple second laminated bodies 202. That is to say, the multiple second laminated bodies 202 each provided with the cut surfaces 211 and 212 are formed as a consequence of the first cutting step. Each of the cut surfaces 211 and 212 is a surface parallel to the direction of lamination of the second laminated bodies 202 as a whole, for example. Moreover, portions near the side surfaces of the first laminated body 201 which contribute less to power generation can be removed by the first cutting step, thereby improving the volumetric energy density of the manufactured battery. In addition, even when layout accuracy of the respective layers in the first laminated body 201 is not high and locations of the side surfaces of the respective layers are not aligned, there is no influence to the battery to be eventually manufactured since the portions near the side surfaces of the first laminated body 201 are cut out. Accordingly, it is not necessary to increase the layout accuracy of the respective layers in the first laminated body 201. Thus, it is possible to increase a manufacturing speed of the first laminated body 201 and to improve productivity.

In the cutting in the first cutting step, the first laminated body 201 is cut out by conducting shearing work while using a cutting blade, for example.

Meanwhile, in the first cutting step, the first laminated body 201 is cut out while applying a first pressure in the direction of lamination to the first laminated body 201, for example. In the case of cutting the first laminated body 201 with the cutting blade, for instance, the first laminated body 201 is fixed by pressure application while using a mechanism to hold the materials, which is also called a stripper, in order to fix the cutting positions. In this way, it is possible to cut the first laminated body 201 at high positional accuracy and in a short time.

In the case of using the mechanism to hold the materials, a compressing force in the direction of lamination acts on the respective layers in the first laminated body 201 by using the first pressure applied in the direction of lamination. When thicknesses of the respective layers are reduced to the utmost limits that reject further compression, a force in a direction perpendicular to the direction of lamination is generated. A deformation (such as outward stretch of the first laminated body 201) is generated due to this force in the direction perpendicular to the direction of lamination. Here, amounts of deformation vary among the electrode active material layer 112, the counter electrode active material layer 122, and the solid electrolyte layer 130 because characteristics of the respective layers including compound ratios of particles and binders constituting the respective layers, hardness, and the like are different. Metal foils are frequently used in the electrode current collector 111 and the counter electrode current collector 121. Accordingly, the electrode active material layer 112 and the counter electrode active material layer 122 that form adhesive interfaces with the electrode current collector 111 and the counter electrode current collector 121 tends to be kept from being stretched. On the other hand, the solid electrolyte layer 130 may be largely stretched because the electrode active material layer 112 and the counter electrode active material layer 122 both in the state of a particle layer are bonded thereto. The first pressure applied in the direction of lamination is released when the cutting is finished. In this instance, the layer that is stretched largely in the direction perpendicular to the direction of lamination recedes from a position at the point of cutting into the laminated body. In other words, cut surfaces of the solid electrolyte layer 130 bring about the recesses that are recessed stepwise into the laminated body relative to the electrode active material layer 112 and the counter electrode active material layer 122. As a consequence, the recesses 101 and 102 are formed on the cut surfaces 211 and 212 of the second laminated body 202 as illustrated in Fig. 13.

Meanwhile, in the case of the high bonding strength between the solid electrolyte layer 130 and the electrode active material layer 112 as well as the counter electrode active material layer 122, the solid electrolyte layer 130 recedes while dragging the electrode active material layer 112 and the counter electrode active material layer 122. Accordingly, the recesses 101a and 102a having the tapered shapes as in the battery 3 are formed instead of receding into the stepped shapes.

Moreover, in the first cutting step, the multiple second laminated bodies 202 are formed by cutting and dividing the single first laminated body 201 into the multiple laminated bodies, for example. The multiple second laminated bodies 202 each having the same size can be formed by cutting the first laminated body 201 at equal intervals. In this way, the multiple second laminated bodies 202 can be formed by using the single first laminated body 201 produced collectively, whereby productivity is improved. Meanwhile, in the case of cutting the single first laminated body 201 in the elongate belt-like shape while moving the cutting positions in the longitudinal direction, one second laminated body 202 can be formed by cutting one position after a cutting a second position and so on. Thus, it is also possible to reduce the number of times of cutting operations for forming the multiple second laminated bodies 202. Instead, the multiple second laminated bodies 202 may be formed by preparing the multiple first laminated bodies 201 as many as the multiple second laminated bodies 202 to be formed, and then cutting the multiple first laminated bodies 201 one by one.

Next, as a laminating step, a third laminated body 203 is formed by laminating the multiple second laminated bodies 202 as illustrated in Fig. 9 (step S13).

To be more precise, as illustrated in Figs. 12 and 13, the multiple second laminated bodies 202 are laminated such that the respective cut surfaces 211 and 212 of the multiple second laminated bodies 202 face in the same directions. That is to say, in the third laminated body 203, the respective cut surfaces 211 of the multiple second laminated bodies 202 face in the same direction and the respective cut surfaces 212 of the multiple second laminated bodies 202 face in the same direction. In the third laminated body 203, the respective cut surfaces 211 of the multiple second laminated bodies 202 overlap one another and the respective cut surfaces 212 of the multiple second laminated bodies 202 overlap one another when viewed in the direction of lamination, for example. Thus, the side surface 11 and the side surface 12 of the power generation element 10 are formed. The side surface 11 is the surface formed by joining the respective cut surfaces 211 of the multiple second laminated bodies 202, and the side surface 12 is the surface formed by joining the respective cut surfaces 212 of the multiple second laminated bodies 202. Here, among the respective cut surfaces 211 of the multiple second laminated bodies 202, there may be the cut surfaces 211 not joined to each other. Likewise, among the respective cut surfaces 212 of the multiple second laminated bodies 202, there may be the cut surfaces 212 not joined to each other.

Here, an additional current collector and the like may further be laminated in the laminating step in the case where the current collector and the like are not disposed at the uppermost part or the lowermost part of the third laminated body 203 due to the lamination structure of the first laminated body 201.

Next, as a second cutting step, a fourth laminated body 204 is formed by cutting the third laminated body 203 as illustrated in Fig. 9 (step S14). In this instance, by cutting the third laminated body 203 in such a way as to cut the multiple second laminated bodies 202 collectively, the fourth laminated body 204 is provided with a pair of cut surfaces 221 and 222 facing each other, which represents an example of a second pair of cut surfaces.

To be more precise, the third laminated body 203 is cut out in the direction of lamination at positions indicated with dashed lines C2 illustrated in Fig. 12, for example. The dashed lines C2 are lines in a direction intersecting, or more specifically, orthogonal to the cut surfaces 211 and 212 in plan view of the third laminated body 203. The positions to cut the third laminated body 203 are parallel to one another, for example. In this way, the multiple second laminated bodies 202 are cut out collectively. Moreover, by cutting the third laminated body 203 collectively at two positions as described above, the cut surfaces 221 and 222 are provided as the second pair of cut surfaces to the fourth laminated body 204 as illustrated in Figs. 12 and 14. That is to say, the fourth laminated body 204 provided with the cut surfaces 221 and 222 are formed as a consequence of the second cutting step. Each of the cut surfaces 221 and 222 is a surface parallel to the direction of lamination of the fourth laminated body 204 as a whole, for example. Moreover, portions near the side surfaces of the third laminated body 203 facing in a different direction from the cut surfaces 221 and 222, which contribute less to power generation, can be removed by the second cutting step, thereby improving the volumetric energy density of the manufactured battery. The fourth laminated body 204 thus formed is the power generation element 10 in the batteries 1 and 2. Moreover, the cut surface 221 is the side surface 21 while the cut surface 222 is the side surface 22. Since the battery 1 is formed from the power generation element 10 as illustrated in Figs. 1 to 3, the battery 1 can be manufactured through the above-described steps.

As illustrated in Figs. 12 and 14, the cut surfaces 221 and 222 are formed by cutting the multiple second laminated bodies 202 collectively. Accordingly, the flat cut surfaces 221 and 222 are easily formed like the side surfaces on the cut surface 211 side and the cut surface 212 side of the third laminated body 203 without being influenced by the positional accuracy to laminate the multiple second laminated bodies 202 in the course of laminating the multiple second laminated bodies 202.

In the cutting in the second cutting step, the third laminated body 203 is cut out by conducting shearing work while using a cutting blade, for example. Here, in the second cutting step, the third laminated body 203 may be cut out by using laser machining, an ultrasonic cutter, or the like in order to render the cut surfaces even flatter.

In the meantime, in the second cutting step, the third laminated body 203 is cut out while applying a second pressure, which is smaller than the first pressure, in the direction of lamination, for example. To be more precise, as with the case of cutting the first laminated body 201 with the cutting blade, the third laminated body 203 is fixed by pressure application while using the mechanism to hold the materials. The above-mentioned stretch of the solid electrolyte layer 130 can be suppressed by applying the pressure in the direction of lamination to the third laminated body 203 with the second pressure smaller than the first pressure. Accordingly, the cut surfaces 221 and 222 flatter than the cut surfaces 211 and 212 are formed in the second cutting step.

Meanwhile, the third laminated body 203 may be cut out in the second cutting step without applying the pressure in the direction of lamination. In this way, it is possible to form the flatter cut surfaces 221 and 222.

Alternatively, the third laminated body 203 may be cut out in the second cutting step under a condition of a reduced load of the cutting blade on the third laminated body 203 by pressing a smaller region of the cutting blade against the principal surface of the third laminated body 203, for example.

Next, as illustrated in Fig. 9, as an insulating member forming step, the insulating members 61, 62, 63, and 64 are formed on the side surfaces 11, 12, 21, and 22 of the power generation element 10, which is the fourth laminated body 204 thus formed (step S15). To be more precise, the insulating member 63 is formed so as to cover the entire side surface 11. Then, the insulating member 64 is formed so as to cover the entire side surface 12. Meanwhile, the insulating member 61 is formed so as to cover the electrode layers 110 on the side surface 21. Moreover, the insulating member 62 is formed so as to cover the counter electrode layers 120 on the side surface 22.

The insulating members 61, 62, 63, and 64 are formed by coating a resin material having fluidity and curing the resin material, for example. The coating is carried out in accordance with an ink jet method, a spraying method, a screen-printing method, a gravure printing method, and the like. The curing is carried out by drying, heating, light irradiation, and the like depending on the resin material used therein.

Here, in the case of forming the insulating members 61, 62, 63, and 64, a process of forming protective members in regions not supposed to provide the insulating members may be carried out in accordance with masking with tapes, a resist treatment, and the like in order not to insulate the side surfaces of the counter electrode current collectors 121 and the side surfaces of the electrode current collectors 111. It is possible to secure conductivity of the respective current collectors by removing the protective members after the formation of the insulating members 61, 62, 63, and 64.

Next, as an extraction terminal forming step, the extraction terminals are formed on the side surfaces 21 and 22 of the power generation element 10 (step S16). To be more precise, the counter electrode terminal 51 that is electrically connected to the multiple counter electrode layers 120 is formed on the side surface 21. Meanwhile, the electrode terminal 52 that is electrically connected to the multiple electrode layers 110 is formed on the side surface 22.

For example, the counter electrode terminal 51 is formed by coating the conductive resin in such a way as to cover the insulating member 61 and the portion of the side surface 21 not covered with the insulating member 61, and then curing the resin. Meanwhile, the electrode terminal 52 is formed by coating the conductive resin in such a way as to cover the insulating member 62 and the portion of the side surface 22 not covered with the insulating member 62, and then curing the resin. Here, the counter electrode terminal 51 and the electrode terminal 52 may be formed in accordance with other methods including printing, plating, vapor deposition, sputtering, welding, soldering, bonding, and so forth.

The battery 2 illustrated in Figs. 4 to 6 can be manufactured by carrying out the aforementioned steps.

As described above, in the manufacturing method according to the present embodiment, the multiple second laminated bodies 202 provided with the cut surfaces 211 and 212 being the first pairs of cut surfaces are formed in the first cutting step, and the fourth laminated body 204 provided with the cut surfaces 221 and 222 being the second pairs of cut surfaces is formed in the second cutting step. In the second cutting step, the multiple second laminated bodies 202 laminated on one another are cut out collectively. Thus, the cut surfaces 221 and 222 can be easily flattened. These cut surfaces 211, 212, 221, and 222 constitute the side surfaces 11, 12, 21, and 22 of the power generation element 10. On the other hand, it takes time in the case of forming the two pairs of cut surfaces in the first cutting step. In addition, another cutting step may possibly be required if the position of any of the cut surfaces is displaced in the course of lamination in the laminating step. Meanwhile, a position detection apparatus or the like is required in the case of conducting lamination while accurately aligning the positions of the cut surfaces, thus leading to a cost increase. In the meantime, in the case of forming all of the side surfaces of the power generation element 10 with the cut surfaces obtained by cutting the third laminated body 203 without carrying out the first cutting step, it is necessary to individually form multiple laminated bodies corresponding to the multiple second laminated bodies 202 substantially in uniform sizes. This process will deteriorate productivity. Accordingly, efficient production of the battery is enabled by manufacturing the battery through the first cutting step and the second cutting step.

According to the above-mentioned effects, the multiple second laminated bodies 202 having the same lamination structure as that of the multiple battery cells 100 can be efficiently manufactured by cutting the first laminated body 201 in the first cutting step. Moreover, in the laminating step, the multiple second laminated bodies 202 are laminated such that the respective cut surfaces 211 and 212 of the multiple second laminated bodies 202 face in the same directions, so that the cut surfaces 211 and 212 can be used as the side surfaces 11 and 12 of the power generation element 10 and the number of times of cutting operations can be reduced. Furthermore, in the second cutting step, the third laminated body 203 is cut out in such a way as to cut the multiple second laminated bodies 202 collectively. Thus, it is possible to manufacture the power generation element 10 while forming the side surfaces 21 and 22 with less asperities. As a consequence, the method for manufacturing a battery according to the present embodiment can achieve high reliability and high productivity of the battery at the same time.

### (Other Embodiments)

The battery according to the present disclosure has been described above based on the embodiment and the modified examples. However, the present disclosure is not limited to the embodiment and the modified examples. Various modifications conceived by those skilled in the art and applied to the embodiment and the modified examples, and other modes constructed by combining certain constituents in the embodiment and the modified examples are also encompassed by the scope of the present disclosure within the range not departing from the gist of the present disclosure.

For example, in the embodiment and the modified examples described above, the multiple battery cells 100 are laminated in such a way as to be electrically connected in parallel in the power generation element 10. However, the present disclosure is not limited to this configuration. The multiple battery cells 100 may be laminated in such a way as to be electrically connected in series. In this case, the multiple battery cells 100 are laminated in arrangement in the z axis such that the orders of arrangement of the respective layers constituting the battery cells 100 are the same.

Meanwhile, in the battery 2, for example, the counter electrode terminal 51 and the insulating members 62, 63, and 64 need not cover the end portions of the principal surface 31 and the end portions of the principal surface 32. In this case, the surfaces on the principal surface 31 side and the principal surface 32 side of the battery 2 become flat. Accordingly, the batteries 2 can be easily stacked.

In addition, the embodiment and the modified examples described above can undergo a variety of alteration, replacement, addition, omission, and the like within the scope of claims or equivalents thereof.

### Industrial Applicability

For example, a battery according to the present disclosure is applicable to a secondary battery such as an all-solid-state battery to be used in various electronic devices, automobiles, and the like.

### Reference Signs List

1, 2, 3 battery
10, 10a power generation element
11, 11a, 12, 12a, 21, 22 side surface
31, 32 principal surface
51 counter electrode terminal
52 electrode terminal
61, 62, 63, 64 insulating member
100, 100a battery cell
101, 101a, 102, 102a recess
110 electrode layer
111 electrode current collector
112 electrode active material layer
120 counter electrode layer
121 counter electrode current collector
122 counter electrode active material layer
130 solid electrolyte layer
201 first laminated body
202 second laminated body
203 third laminated body
204 fourth laminated body
211, 212, 221, 222 cut surface

## Claims

1. A battery comprising:
a power generation element having a structure in which battery cells are laminated, each of the battery cells including:
an electrode layer;
a counter electrode layer; and
a solid electrolyte layer located between the electrode layer and the counter electrode layer,
the power generation element including:
a first pair of side surfaces facing each other; and
a second pair of side surfaces facing each other and different from the first pair of side surfaces,
wherein at least one of the battery cells is provided with a recess where the solid electrolyte layer is receded with respect to the electrode layer and the counter electrode layer on each of the first pair of side surfaces, and
surface roughness Rz₂ of each of the second pair of side surfaces is smaller than surface roughness Rz₁ of each of the first pair of side surfaces.

2. The battery according to claim 1, further comprising:
a first terminal electrode that covers the counter electrode layer and is electrically connected to the counter electrode layer on a first side surface being one of the second pair of side surfaces.

3. The battery according to claim 2, further comprising:
a first insulating member that covers the electrode layer on the first side surface.

4. The battery according to claim 3, wherein the first terminal electrode covers the first insulating member.

5. The battery according to claim 3 or 4, wherein the first insulating member covers at least part of the solid electrolyte layer on the first side surface.

6. The battery according to any one of claims 2 to 5, further comprising a second terminal electrode that covers the electrode layer and is electrically connected to the electrode layer on a second side surface being another one of the second pair of side surfaces.

7. The battery according to any one of claims 2 to 6, wherein the first pair of side surfaces are not provided with terminal electrodes that are electrically connected to the electrode layer and the counter electrode layer.

8. The battery according to claim 7, further comprising:
a second insulating member that covers a third side surface being one of the first pair of side surfaces.

9. The battery according to claim 8, wherein the second insulating member enters the recess.

10. The battery according to any one of claims 1 to 9, wherein
a length of each of the second pair of side surfaces is larger than a length of each of the first pair of side surfaces in directions along an outer periphery of the power generation element when viewed in a direction of lamination.

11. The battery according to any one of claims 1 to 10, wherein the recess has a tapered shape.

12. The battery according to any one of claims 1 to 11, wherein the solid electrolyte layer contains a solid electrolyte provided with lithium-ion conductivity.

13. A method for manufacturing a battery comprising:
a first cutting step of forming second laminated bodies by cutting at least one first laminated body including an electrode layer, a counter electrode layer, and a solid electrolyte layer located between the electrode layer and the counter electrode layer, in which a first pair of cut surfaces facing each other are provided to each of the second laminated bodies by cutting the at least one first laminated body in such a way as to cut the electrode layer, the counter electrode layer, and the solid electrolyte layer collectively;
a laminating step of forming a third laminated body by laminating the second laminated bodies such that the respective first pairs of cut surfaces of the second laminated bodies face in same directions; and
a second cutting step of forming a fourth laminated body by cutting the third laminated body, in which a second pair of cut surfaces facing each other and extending in a direction intersecting the first pair of cut surfaces are provided to the fourth laminated body by cutting the third laminated body in such a way as to cut the second laminated bodies collectively.

14. The method for manufacturing a battery according to claim 13, wherein the at least one first laminated body is cut in the first cutting step while applying a first pressure in a direction of lamination to the at least one first laminated body, and
the third laminated body is cut in the second cutting step by applying no pressure in the direction of lamination to the third laminated body or applying a second pressure being smaller than the first pressure in the direction of lamination to the third laminated body.

15. The method for manufacturing a battery according to claim 13 or 14, wherein the at least one laminated body is a single laminated body, and
the second laminated bodies are formed in the first cutting step by cutting and dividing the single first laminated body into a plurality of laminated bodies.
